# DEMANDE DE BREVET EUROPEEN

(11) **EP 3 203 139 A1**
(43) Date de publication de la demande: **09.08.2017**
(21) Numéro de dépôt: 17153395.3
(22) Date de dépôt: 26.01.2017
(51) Int. Cl.: F21S 8/12

(54) **DISPOSITIF LUMINEUX À BALAYAGE, NOTAMMENT POUR VÉHICULE AUTOMOBILE, MUNI D'UN ÉLÉMENT DE REPLIEMENT DE RAYONS LUMINEUX, ET PROJECTEUR COMPRENANT UN TEL DISPOSITIF LUMINEUX**

(30) Priorité: 08.02.2016 FR 1650964
(71) Demandeur: Valeo Vision, 93012 Bobigny Cedex (FR)
(72) Inventeur: BOINET, Loic, 76240 LE MESNIL ESNARD (FR)

(57) **Abrégé**

L'invention concerne un dispositif lumineux (1) à balayage pour véhicule automobile, comprenant au moins une source de lumière (2) apte à émettre des rayons lumineux (9), caractérisé en ce qu'il comporte un élément de conversion (5) de longueur d'onde agencé pour recevoir les rayons lumineux (9) sur une zone (10) et à réémettre un rayonnement de lumière pour produire un faisceau lumineux, en ce que le dispositif (1) comporte en outre un élément de repliement (3) des rayons lumineux (9) vers l'élément de conversion (5), et des moyens de balayage (4) configurés pour balayer l'élément de repliement (3) avec les rayons lumineux (9) selon une première direction, le balayage des rayons lumineux (9) s'effectuant entre des positions extrêmes (12, 13) de ces rayons lumineux (9) selon ladite première direction, l'élément de repliement étant configuré pour dévier les rayons lumineux (9) lorsqu'ils sont dans ces positions extrêmes (12, 13) vers une partie centrale (11) de la zone (10) de l'élément de conversion (5) de manière à former la partie centrale du faisceau lumineux.

## Description

La présente invention concerne un dispositif lumineux à balayage, notamment pour véhicule automobile, muni d'un élément de repliement de rayons lumineux, et un projecteur comprenant un tel dispositif lumineux.

Les projecteurs de véhicule automobile sont munis d'un ou de plusieurs modules optiques agencés dans un boîtier fermé par une glace de manière à obtenir un ou plusieurs faisceaux lumineux à la sortie du projecteur. De façon simplifiée, un module optique du boîtier comprend notamment une source de lumière, par exemple une (ou plusieurs) diode(s) électroluminescente(s), qui émet des rayons lumineux, et un système optique comportant une ou plusieurs lentilles et, le cas échéant un élément optique, par exemple un réflecteur, pour orienter les rayons lumineux issus des sources lumineuses, afin de former le faisceau lumineux de sortie du module optique.

En outre, on peut utiliser d'autres technologies pour ces dispositifs. Ainsi, il existe des diodes lasers qui peuvent avantageusement remplacer les diodes électroluminescentes. Cependant, les lasers usuels sont d'une couleur qui ne correspond pas aux couleurs réglementaires de tels projecteurs. Le module comporte alors un élément de conversion de longueur d'onde, qui reçoit les rayons lumineux de la source laser et qui les réémet en lumière blanche vers un système optique de projection et forme ainsi une partie du faisceau lumineux du projecteur.

Pour illuminer une zone large de l'élément de conversion avec des rayons lumineux, des moyens de balayage des rayons lumineux sont nécessaires. Le balayage est effectué à une fréquence suffisamment importante pour que l'oeil humain ne perçoive pas le mouvement et voit un éclairage continu du faisceau sortant du module. L'amplitude de balayage définit le déplacement des rayons lumineux dans l'espace et donc la taille de la zone éclairée sur l'élément de conversion. Autrement dit, pour un balayage à une dimension, les rayons se déplacent entre deux positions extrêmes. Ainsi, les rayons passent sensiblement par toutes les positions situées entre ces deux positions extrêmes, et notamment par une ou des positions centrales par rapport aux positions extrêmes, et qui sont centrales par rapport aux moyens de balayage.

Les moyens de balayage connus sont par exemple des éléments de type MEMS (pour « Micro-Electro-Mechanical-Systems » en anglais ou microsystèmes électromécaniques), comprenant un ou des micro-miroirs qui réfléchissent les rayons sur la zone. Ces micro-miroirs sont par exemple animés d'au moins un mouvement rotatif autour d'un axe qui engendre le balayage de la zone selon une première direction. Un second micro-miroir ou un autre mouvement rotatif du premier miroir autour d'un second axe perpendiculaire au premier axe permet de produire un balayage selon deux directions.

Le balayage par les rayons s'effectue d'un bord à l'autre de la zone illuminée de l'élément de conversion. Cependant, le balayage ne peut avoir une vitesse constante sur toute la largeur de la zone. En effet, le balayage doit s'arrêter à chaque bord de la zone, pour repartir dans un autre sens vers l'autre bord. Autrement dit, les rayons lumineux sont stoppés dans la position extrême afin de balayer la zone vers l'autre position extrême. Par conséquent, l'éclairage réémis par l'élément de conversion n'est pas uniforme, l'éclairage du bord de la zone illuminée étant plus intense que celle de sa partie centrale, les rayons lumineux passant plus rapidement par les positions centrales.

Or, on souhaite plutôt obtenir un faisceau lumineux dont la partie centrale est plus lumineuse que les côtés, notamment afin de répondre aux réglementations en vigueur.

L'invention vise donc à obtenir un dispositif lumineux qui améliore la situation et évite les défauts précités, afin d'obtenir un éclairage qui réponde à ces réglementations, qui demandent un éclairage plus intense sur la partie centrale que sur les côtés.

Pour cela, l'invention concerne un dispositif lumineux à balayage pour véhicule automobile, comprenant au moins une source de lumière apte à émettre des rayons lumineux.

Le dispositif est remarquable en ce qu'il comporte un élément de conversion de longueur d'onde agencé pour recevoir les rayons lumineux sur une zone et à réémettre un rayonnement de lumière pour produire un faisceau lumineux, en ce que le dispositif comporte en outre un élément de repliement des rayons lumineux vers l'élément de conversion, et des moyens de balayage configurés pour balayer l'élément de repliement avec les rayons lumineux selon une première direction, le balayage des rayons lumineux s'effectuant entre des positions extrêmes selon ladite première direction, l'élément de repliement étant configuré pour dévier les rayons lumineux qui sont auxdites positions extrêmes vers une partie centrale de la zone de l'élément de conversion de manière à former la partie centrale du faisceau lumineux.

Ainsi, les positions extrêmes plus intenses des rayons lumineux sont déviées vers la partie centrale de l'élément de conversion, et sont donc réémises par l'élément de conversion dans la partie centrale du faisceau lumineux produit par le dispositif. On obtient de la sorte un faisceau lumineux avec une intensité lumineuse plus importante au centre que sur les côtés.

Selon différents modes de réalisation de l'invention, qui pourront être pris ensemble ou séparément :
- le balayage des rayons lumineux s'effectuant en passant par des positions centrales des rayons lumineux, lesdites positions centrales étant situées sensiblement au milieu des positions extrêmes, l'élément de repliement est configuré pour dévier les rayons lumineux qui sont auxdites positions centrales vers les bords de la zone de manière à former les côtés du faisceau lumineux,
- l'élément de repliement est configuré pour dévier les rayons lumineux balayés depuis une première position extrême jusqu'à une position centrale sur la zone, de sorte que ces rayons lumineux déviés balayent la zone depuis la partie centrale de la zone jusqu'à un premier bord de la zone, et pour dévier les rayons lumineux balayés depuis ladite position centrale jusqu'à une deuxième position extrême opposée à la première position extrême sur la zone, de sorte que ces rayons lumineux déviés balayent la zone depuis la partie centrale de la zone jusqu'à un deuxième bord de la zone opposé au premier bord,
- l'élément de repliement permet d'inverser selon la direction de balayage, la distribution de l'intensité lumineuse produite sur l'élément de conversion par les moyens de balayage et les rayons lumineux,
- l'amplitude du balayage définit le déplacement des rayons lumineux, et donc des positions centrales et extrêmes qu'ils prennent au cours du balayage,
- les positions centrales sont au centre du balayage, et les positions extrêmes sont aux extrémités du balayage,
- l'élément de repliement est positionné sur le chemin optique des rayons lumineux, entre les moyens de balayage et l'élément de conversion,
- l'élément de repliement comprend deux faces réfléchissantes,
- les deux faces réfléchissantes sont adjacentes et forment un V, l'intérieur du V étant destiné à réfléchir les rayons lumineux,
- l'élément de repliement est agencé dans l'axe des moyens de balayage de sorte que le sommet du V reçoive les positions centrales des rayons lumineux,
- l'élément de repliement est un miroir muni de deux plans formant les deux faces réfléchissantes,
- l'élément de repliement comporte un bloc pourvu de deux faces munies d'un revêtement réfléchissant, notamment en aluminium, ces faces formant lesdites faces réfléchissantes,
- l'élément de repliement comporte un bloc comprenant deux faces, ledit bloc étant formé en matière transparente pour permettre une réflexion totale de la lumière sur les deux faces,
- l'élément de repliement est un prisme dont deux faces forment les deux faces réfléchissantes,
- ledit dispositif comporte un système optique de projection agencé en sortie du dispositif pour produire au moins en partie le faisceau lumineux,
- ledit dispositif comporte un miroir secondaire mobile agencé entre l'élément de repliement et l'élément de conversion selon le trajet des rayons lumineux, le miroir secondaire étant configuré pour dévier les rayons lumineux selon une deuxième direction,
- l'élément de repliement est mobile et configuré pour faire balayer les rayons lumineux selon une deuxième direction,
- l'élément de repliement est fixe,
- les moyens de balayage sont configurés pour faire balayer les rayons lumineux selon une deuxième direction,
- les moyens de balayage sont munis d'un micro-miroir mobile configuré pour faire balayer les rayons lumineux selon la première direction
- le micro-miroir mobile est également configuré pour faire balayer les rayons lumineux selon la deuxième direction,
- l'élément de conversion comprend un substrat et une couche d'un matériau photoluminescent, par exemple comportant du phosphore, ou du grenat d'yttrium et d'aluminium appelé YAG,
- la source de lumière est au moins une diode laser,
- la partie centrale de la zone est définie selon une première direction d'extension de ladite zone,
- la partie centrale de la zone est définie sur toute l'étendue de la zone selon une deuxième direction d'extension de ladite zone, la deuxième direction étant différente de la première,
- la partie centrale est située sensiblement au milieu de ladite zone.

L'invention se rapporte également à un projecteur ou un feu de véhicule automobile comprenant un tel dispositif lumineux à balayage.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue de côté d'un premier mode de réalisation d'un dispositif selon l'invention,
- la figure 2 illustrant de façon schématique le dispositif en vue de dessus, l'élément de repliement étant un miroir,
- la figure 3 illustrant de façon schématique, une vue de côté d'un deuxième mode de réalisation d'un dispositif selon l'invention.

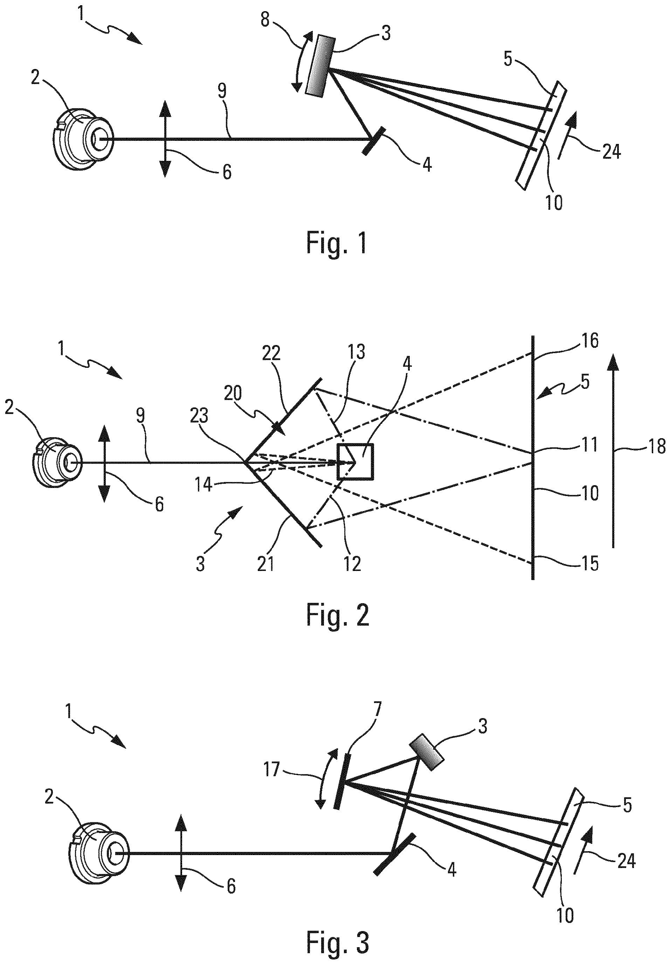

Les figures 1 et 3 représentent un dispositif lumineux 1, notamment pour véhicule automobile, selon un premier et un deuxième mode de réalisation de l'invention. Le dispositif 1 comprend au moins une source de lumière 2 apte à émettre des rayons lumineux 9. Ici, la source de lumière 2 est par exemple une ou plusieurs diodes laser. La source de lumière 2 peut aussi comprendre un dispositif optique combinant plusieurs rayonnements lasers, par exemple à l'aide de fibres optiques ou de dispositifs tirant profit des polarisations différentes de différentes sources laser. Le dispositif lumineux 1 comporte, de préférence, une ou plusieurs lentilles de collimation 6 des rayons lumineux 9 disposée(s) à la sortie de la source 2.

Le dispositif 1 comprend également un élément de conversion 5 de longueur d'onde configuré pour recevoir les rayons lumineux 9 sur une zone 10, et à réémettre un rayonnement de lumière pour produire un faisceau lumineux, non représenté sur les figures. L'élément de conversion 5 modifie la longueur d'onde des rayons 9 pour obtenir la couleur souhaitée pour l'éclairage du projecteur, par exemple en lumière blanche. L'élément de conversion 5 est par exemple muni d'un substrat transparent et une couche d'un matériau photoluminescent, par exemple à base de phosphore.

Dans une première variante, les rayons lumineux 9 traversent l'élément de conversion 5 en changeant de couleur pour former le faisceau lumineux. Dans une seconde variante, l'élément de conversion 5 est configuré pour dévier les rayons lumineux 9, le substrat ayant les propriétés d'un miroir.

Le dispositif 1 est, de préférence, muni d'un système optique de projection, non représenté sur les figures, qui sert à projeter le faisceau lumineux issu de l'élément de conversion vers l'extérieur du dispositif. Pour cela, le système optique de projection est sensiblement agencé dans l'axe optique de réémission du faisceau lumineux de l'élément de conversion.

Le dispositif 1 comporte en outre un élément de repliement 3 des rayons de lumière 9 vers l'élément de conversion 5, et des moyens de balayage 4 configurés pour balayer l'élément de repliement 3 avec les rayons lumineux 9. Les moyens de balayage 4 reçoivent les rayons lumineux 9 de la source 2 et le renvoient vers l'élément de repliement 3. Ainsi, l'élément de repliement 3 est positionné sur le chemin optique des rayons lumineux 9, entre les moyens de balayage 4 et l'élément de conversion 5.

Le balayage 20 est représenté sur la figure 2, qui est une vue de dessus du dispositif 1 du premier mode de réalisation. Le balayage 20 est effectué à une vitesse suffisamment élevée pour que l'oeil n'aperçoive pas le balayage et que l'élément de conversion transmette des rayons lumineux sensiblement continus pour l'oeil. En outre, l'amplitude du balayage 20 définit le déplacement des rayons lumineux 9, et donc des positions centrales 14 et extrêmes 12, 13 qu'ils prennent au cours du balayage 20. Les positions centrales 14 sont au centre du balayage 20, et les positions extrêmes 12, 13 sont aux extrémités du balayage 20.

On observe que le balayage 20 est effectué selon une première direction 18, par exemple horizontale, de manière à obtenir un déplacement horizontale des rayons lumineux 9 sur la zone 10. Les rayons 9 balayent l'élément de repliement 3 entre deux positions extrêmes 12 et 13. Les deux positions extrêmes 12 et 13 des rayons 9 sont choisies de préférence pour que la zone 10 éclairée couvre sensiblement toute la surface de l'élément de repliement 3.

Selon l'invention, l'élément de repliement 3 est configuré pour dévier les positions extrêmes 12, 13 des rayons lumineux 9 vers une partie centrale 11 de la zone 10 de l'élément de conversion 5 de manière à former la partie centrale du faisceau lumineux. La partie centrale 11 est située sensiblement au milieu de ladite zone 10 et est définie ici selon une première direction d'extension de ladite zone 10. Ainsi, les positions extrêmes du balayage 20 dont l'éclairement est plus intense à cause du mouvement des moyens de balayage, forment la partie centrale du faisceau lumineux, celle-ci ayant par conséquent une intensité lumineuse plus grande que les autres parties du faisceau lumineux.

De préférence, l'élément de repliement 3 est aussi configuré pour dévier les positions centrales 14 des rayons lumineux 9 vers les bords 15, 16 de la zone 10 de manière à former les côtés du faisceau lumineux. Ainsi, les côtés du faisceau lumineux ont une intensité plus faible que la partie centrale, car les positions centrales 14 du balayage 20 ont une intensité plus faible que les positions extrêmes 12, 13.

L'élément de repliement 3 permet ainsi d'inverser selon la direction de balayage 18, la distribution de l'intensité lumineuse produite sur l'élément de conversion 5 par les moyens de balayage 4 et les rayons lumineux 9.

Dans le premier mode de réalisation de la figure 2, l'élément de repliement 3 est un miroir muni de deux plans formant les deux faces réfléchissantes 21, 22, qui sont adjacentes et forment un V. Le sommet 23 du V fait la jonction entre les deux faces réfléchissantes 21, 22, l'intérieur du V étant destiné à réfléchir les rayons lumineux 9 vers l'élément de conversion 5.

Le miroir en V est agencé dans l'axe des moyens de balayage (4) de sorte que le balayage 20 des rayons soit centré sur le miroir, et ainsi que le sommet 23 du V reçoive et réfléchisse les positions centrales 14 du balayage 20, tandis que les ailes libres du V réfléchissent les positions extrêmes 12, 13. Ainsi, les positions centrales 14 du balayage 20 sont renvoyées vers les deux bords 15, 16 de la zone 10.

Dans un autre mode de réalisation, non représenté sur les figures, l'élément de repliement est un prisme dont deux faces forment les deux faces réfléchissantes. Le prisme est configuré pour opérer de la même manière que le miroir en V.

Les moyens de balayage 4 sont par exemple munis d'un micro-miroir mobile permettant de balayer l'élément de repliement 3 par réflexion des rayons lumineux 9 vers l'élément de repliement 3. Le balayage 20 est effectué selon une première direction 18 de la surface de l'élément de repliement 3, qui est par exemple horizontale. Le micro-miroir est animé d'un mouvement périodique produit par un actionneur (non représenté), qui utilise par exemple un effet de résonnance du micro-miroir provoqué, par exemple, par des électrodes pour le faire osciller. Le mouvement du micro-miroir est par exemple opéré autour d'un axe de rotation orthogonal à la première direction 18 afin que les rayons lumineux 9 balayent la surface de l'élément de repliement 3 selon ladite première direction 18.

Dans une première variante de réalisation de la figure 1, l'élément de repliement 3 est mobile et configuré pour faire balayer les rayons lumineux 9 selon une deuxième direction 24, de préférence sensiblement perpendiculaire à la première direction, afin de produire un mouvement des rayons qui se déplace aisément sur l'élément de conversion 5. La deuxième direction est par exemple verticale. Ainsi, une grande zone 10 de l'élément de conversion 5 peut aisément être balayée par les rayons lumineux 9. Le mouvement de l'élément de repliement 3 est représenté par la flèche 8.

Dans une deuxième variante de réalisation, représentée sur la figure 3, on utilise un miroir secondaire 7 mobile, qui peut également être un micro-miroir. Il est par exemple agencé entre l'élément de repliement 3 et l'élément de conversion 5. Le miroir secondaire 7 est configuré pour déplacer les rayons lumineux 9 sur l'élément de conversion 5 selon la deuxième direction 24. La flèche 17 représente le mouvement du miroir secondaire 7. L'élément de repliement 3 est fixe dans cette deuxième variante.

Dans une troisième variante de réalisation, les moyens de balayage 4 sont également configurés pour balayer l'élément de conversion 5 avec les rayons lumineux 9 selon la deuxième direction 24. Autrement dit, c'est le même micro-miroir qui balaye la surface de l'élément de repliement 3 avec les rayons lumineux 9 selon les deux directions 18, 24. Le micro-miroir suit donc un autre mouvement, par exemple de rotation autour d'un deuxième axe de rotation perpendiculaire au précédent. Ainsi, le micro-miroir permet aux rayons lumineux de balayer à la fois horizontalement et verticalement l'élément de conversion 5. L'élément de repliement 3 est également fixe dans cette troisième variante.

Dans la description précédente, les micro-miroirs mentionnés comme moyen de balayage sont par exemple de type MEMS. Cependant, l'invention n'est nullement limitée à ce moyen de balayage et peut utiliser d'autres sortes de moyens de balayage comme par exemple une série de miroirs agencés sur un élément rotatif, la rotation de l'élément engendrant un balayage de l'élément de conversion par les rayons lumineux.

## Revendications

1. Dispositif lumineux (1) à balayage pour véhicule automobile, comprenant au moins une source de lumière (2) apte à émettre des rayons lumineux (9), **caractérisé en ce qu'**il comporte un élément de conversion (5) de longueur d'onde agencé pour recevoir les rayons lumineux (9) sur une zone (10) et à réémettre un rayonnement de lumière pour produire un faisceau lumineux, **en ce que** le dispositif (1) comporte en outre un élément de repliement (3) des rayons lumineux (9) vers l'élément de conversion (5), et des moyens de balayage (4) configurés pour balayer l'élément de repliement (3) avec les rayons lumineux (9) selon une première direction (18), le balayage des rayons lumineux (9) s'effectuant entre des positions extrêmes (12, 13) selon ladite première direction (18), l'élément de repliement (3) étant configuré pour dévier les rayons lumineux (9) qui sont auxdites positions extrêmes (12, 13) vers une partie centrale (11) de la zone (10) de l'élément de conversion (5) de manière à former la partie centrale du faisceau lumineux.

2. Dispositif lumineux (1) selon la revendication 1, **caractérisé en ce que**, le balayage des rayons lumineux (9) s'effectuant en passant par des positions centrales (14) des rayons lumineux (9), lesdites positions centrales (14) étant situées sensiblement au milieu des positions extrêmes, l'élément de repliement (3) est configuré pour dévier les rayons lumineux (9), qui sont auxdites positions centrales (14) vers les bords (15, 16) de la zone (10) de manière à former les côtés du faisceau lumineux.

3. Dispositif lumineux (1) selon la revendication 2, **caractérisé en ce que** l'élément de repliement (3) est configuré pour :
- dévier les rayons lumineux (9) balayés depuis une première position extrême (12) jusqu'à une position centrale (14) sur la zone (10), de sorte que ces rayons lumineux déviés balayent la zone (10) depuis ladite partie centrale (11) de la zone (10) jusqu'à un premier bord (16) de la zone (10) ; et
- dévier les rayons lumineux balayés depuis ladite position centrale (14) jusqu'à une deuxième position extrême (13) opposée à la première position extrême (12) sur la zone (10), de sorte que ces rayons lumineux déviés balayent la zone (10) depuis la partie centrale (11) de la zone (10) jusqu'à un deuxième bord (15) de la zone (10) opposé au premier bord (16).

4. Dispositif lumineux (1) selon l'une quelconque des revendications précédentes, **caractérisé en ce que** l'élément de repliement (3) comprend deux faces réfléchissantes (21, 22).

5. Dispositif lumineux (1) selon la revendication 4, **caractérisé en ce que** les deux faces réfléchissantes (21, 22) sont adjacentes et forment un V, l'intérieur du V étant destiné à réfléchir les rayons lumineux (9).

6. Dispositif lumineux (1) selon la revendication 5, **caractérisé en ce que** l'élément de repliement (3) est agencé dans l'axe des moyens de balayage (4) de sorte que le sommet (23) du V reçoive les positions centrales (14) des rayons lumineux (9).

7. Dispositif lumineux (1) la revendication 6, **caractérisé en ce que** l'élément de repliement (3) est un miroir muni de deux plans formant les deux faces réfléchissantes (21, 22).

8. Dispositif lumineux (1) selon l'une quelconque des revendications précédentes, **caractérisé en ce qu'**il comporte un système optique de projection agencé en sortie du dispositif (1) pour produire au moins en partie le faisceau lumineux.

9. Dispositif lumineux (1) selon l'une quelconque des revendications précédentes, **caractérisé en ce qu'**il comporte un miroir secondaire (7) mobile agencé entre l'élément de repliement (3) et l'élément de conversion (5) selon le trajet des rayons lumineux (9), le miroir secondaire (7) étant configuré pour dévier les rayons lumineux (9) selon une deuxième direction (24).

10. Dispositif selon l'une quelconque des revendications 1 à 8, **caractérisé en ce que** l'élément de repliement (3) est mobile et configuré pour faire balayer les rayons lumineux (9) selon une deuxième direction (24).

11. Dispositif selon l'une quelconque des revendications 1 à 8, **caractérisé en ce que** les moyens de balayage (4) sont configurés pour faire balayer les rayons lumineux (9) selon une deuxième direction (24).

12. Dispositif selon l'une quelconque des revendications précédentes, **caractérisé en ce que** les moyens de balayage (4) sont munis d'un micro-miroir mobile configuré pour faire balayer les rayons lumineux (9) selon la première direction (18).

13. Dispositif selon l'une quelconque des revendications précédentes, **caractérisé en ce que** l'élément de conversion (5) comprend un substrat et une couche d'un matériau photoluminescent, par exemple comportant du phosphore ou du grenat d'yttrium et d'aluminium.

14. Dispositif selon l'une quelconque des revendications précédentes, **caractérisé en ce que** la source de lumière (2) est au moins une diode laser.

15. Projecteur de véhicule automobile comprenant un dispositif lumineux (1) selon l'une quelconque des revendications précédentes.
